# EUROPEAN PATENT APPLICATION

(11) **EP 4 534 992 A1**
(43) Date of publication of application: **09.04.2025**
(21) Application number: 22944962.4
(22) Date of filing: 07.12.2022
(51) Int. Cl.: G01N 27/62, G01N 30/26, G01N 30/72, H01J 49/00, H01J 49/04, H01J 49/42

(54) **MASS SPECTROMETRY METHOD**

(30) Priority: 01.06.2022 JP 2022089617
(71) Applicant: SHIMADZU CORPORATION, Kyoto-shi, Kyoto 604-8511 (JP)
(72) Inventor: KOBAYASHI, Manami, Kyoto-shi, Kyoto 604-8511 (JP)
(74) Representative: Müller-Boré & Partner Patentanwälte PartG mbB
(86) International application number: PCT/JP2022/045132
(87) International publication number: WO 2023/233688

(57) **Abstract**

A mass spectrometry method including: a preparation step (step 1) of adding a predetermined alkali metal ion to a liquid sample; an ionization step (step 3) of ionizing a target compound contained in the liquid sample to which the alkali metal ion has been added; and a measurement step (step 7) of measuring an intensity of an adduct ion formed in the ionization step by an addition of the predetermined alkali metal ion to the target compound, or an intensity of a product ion derived from the adduct ion.

## Description

### TECHNICAL FIELD

The present invention relates to a method for mass spectrometry of a target compound contained in a liquid sample.

### BACKGROUND ART

In order to analyze a target compound contained in a liquid sample, a liquid chromatograph mass spectrometer has widely been used. In the liquid chromatograph mass spectrometer, various compounds contained in a liquid sample are separated by a column of a liquid chromatograph and introduced into the mass spectrometer. In the mass spectrometer, the compounds introduced from the liquid chromatograph are sequentially ionized, and ions of the compounds are separated according to their mass-to-charge ratios. The intensity of separated ions is measured for each mass-to-charge ratio.

In quantifying the target compound, multiple reaction monitoring (MRM) measurement is performed. In the MRM measurement, ions having a mass-to-charge ratio characteristic of the target compound are selected as precursor ions from among ions generated from the liquid sample, and product ions having a specific mass-to-charge ratio are selected from among product ions derived from the precursor ions, and the intensity of the selected product ions is measured. In the MRM measurement, ions having a specific mass-to-charge ratio characteristic of the target compound are narrowed down in two stages of the selection of precursor ions and the selection of product ions. Therefore, even in a case where a liquid sample contains foreign matters that generate ions having the same mass-to-charge ratio as the mass-to-charge ratio of the precursor ions of the target compound, the target compound can be accurately quantified without being affected by the foreign matters. In addition, since MRM measurement has high sensitivity, MRM measurement is particularly used for quantifying a very small amount of a target compound contained in a sample.

As a representative ionization method for ionizing a liquid sample, an electrospray ionization (ESI) method is known. When a compound is ionized by the ESI method (positive mode), a large number of protonated ions formed by an addition of a hydrogen ion (proton) to the compound are usually generated. Therefore, in MRM measurement, protonated ions are often used as precursor ions.

However, when a compound having a complicated molecular structure, such as an organic polymer compound, is ionized, various ions other than protonated ions may be generated. Examples of such ions include dehydrated ions, and adduct ions such as solvated ions, ammonium adduct ions, sodium adduct ions, and potassium adduct ions. For example, an ammonium adduct ion is generated by an addition of an ammonium ion contained in a mobile phase used for analysis to a compound. An ammonium adduct ion may be otherwise generated by an addition of an ammonium ion derived from volatile salts such as ammonium formate and ammonium acetate contained in a mobile phase or a solvent used for past analysis and remaining in a mass spectrometer to a compound.

Non Patent Literature 1 shows a result of MRM measurement of a liquid sample containing an extremely small amount (1 ng/mL) of ciguatoxins known as fish toxins using a liquid chromatograph mass spectrometer. In the MRM measurement, sodium adduct ions are used as precursor ions. The solution used as the mobile phase in Non Patent Literature 1 does not contain sodium. Further, it has been reported that sodium adduct ions and potassium adduct ions are generated even when a mobile phase or a solvent used in the past does not contain sodium or potassium. Therefore, it is presumed that these ions are derived from a glass container containing a liquid sample or a mobile phase, a glass capillary constituting an ESI probe, or the like.

### CITATION LIST

### NON PATENT LITERATURE

Non Patent Literature 1: Kentaro Yogi et al., "Detailed LC-MS/MS Analysis of Ciguatoxins Revealing Distinct Regional and Species Characteristics in Fish and Causative Alga from the Pacific", Anal. Chem., 2011, 83, 8886-8891

### SUMMARY OF INVENTION

### TECHNICAL PROBLEM

The amount of the mobile phase or solvent used in the past and remaining in the mass spectrometer is indeterminable, and thus the amount of ammonium ions, which are derived from the residue, added to the target compound is uncontrollable. In addition, sodium ions and potassium ions are derived from a glass container or the like containing a mobile phase or a liquid sample, and the amount of these ions added to the target compound cannot be controlled. Therefore, in MRM measurement in which adduct ions formed by an addition of these ions to a target compound are used as precursor ions, there is a problem in that reproducibility of measurement is poor and it is difficult to accurately quantify the target compound. In addition, when a plurality of kinds of ions are generated from a target compound, and one of the plurality of kinds is selected as a precursor ion, the amount of precursor ions is smaller than that in a case where only one kind of ion is generated, and the measurement sensitivity is poor. As described above, since MRM measurement is used to quantify a very small amount of a target compound contained in a sample, there is a problem in that the target compound cannot be detected if the measurement sensitivity is poor.

Here, the case of the MRM measurement has been described as an example, but there is a problem similar to the above also in selected ion monitoring (SIM) measurement for measuring ions having a specific mass-to-charge ratio and MS/MS scan measurement for selecting precursor ions similarly to the MRM measurement.

An object of the present invention is to provide a mass spectrometry method capable of accurately quantifying a target compound contained in a liquid sample with high sensitivity.

### SOLUTION TO PROBLEM

A mass spectrometry method according to the present invention made to solve the above problems includes:
a preparation step of adding a predetermined alkali metal ion to a liquid sample;
an ionization step of ionizing a target compound contained in the liquid sample to which the alkali metal ion has been added; and
a measurement step of measuring an intensity of an adduct ion formed in the ionization step by adding the predetermined alkali metal ion to the target compound, or an intensity of an ion derived from the adduct ion.

### ADVANTAGEOUS EFFECTS OF INVENTION

**In** the mass spectrometry method according to the present invention, the preparation step is performed before performing mass spectrometry, in which the predetermined alkali metal ion is added to the liquid sample. The predetermined alkali metal ion may be added by adding the ion itself (for example, adding a liquid containing the ion), or may be added by dissolving a salt of the alkali metal in the liquid sample. In addition, when a liquid chromatograph mass spectrometer is used as in the examples described later, the alkali metal ion may be added to a mobile phase.

When the ionization step is performed in a state where the predetermined alkali metal ion has been supplied to the liquid sample, a predetermined alkali metal adduct ion formed by an addition of the alkali metal ion is mainly generated, and generation of other kinds of adduct ions is suppressed. In addition, since most of alkali metal ions are hard to be dissociated, generation of dehydrated ions and solvated ions is also suppressed.

A mass spectrometry method according to the present invention measures the intensity of the adduct ion formed in the ionization step by an addition of the predetermined alkali metal ion to the target compound, or the intensity of the ion derived from the adduct ion. Therefore, the amount of ions to be measured is larger than that in the case of measuring one of a plurality of kinds of ions generated from the target compound due to ions generated from the liquid sample or a sample container, and the target compound can be measured with high sensitivity. In addition, since the mechanism by which the alkali metal adduct ion is generated has reproducibility, the target compound can be accurately analyzed.

### BRIEF DESCRIPTION OF DRAWINGS

[Fig. 1] Fig. 1 is a configuration diagram of a main part of a liquid chromatograph mass spectrometer used to execute an embodiment of a mass spectrometry method according to the present invention.
[Fig. 2] Fig. 2 is a flowchart according to the mass spectrometry method of the present embodiment.
[Fig. 3] Fig. 3 shows a mass spectrum obtained by a conventional mass spectrometry method and a mass spectrum obtained by the mass spectrometry method of the present embodiment for CTX3C, which is one of the ciguatoxins.

### DESCRIPTION OF EMBODIMENTS

Hereinafter, an embodiment of a mass spectrometry method according to the present invention will be described with reference to the drawings.

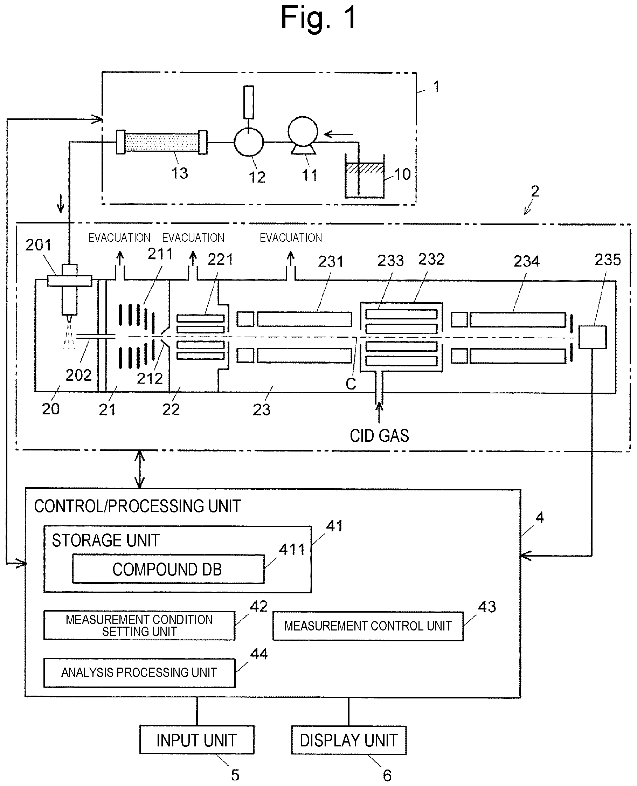

Fig. 1 is a configuration diagram of a main part of a liquid chromatograph mass spectrometer used to execute a mass spectrometry method of the present embodiment. A liquid chromatograph mass spectrometer of the present embodiment includes a liquid chromatograph 1, a mass spectrometer 2, and a control/processing unit 4 which controls operations of the liquid chromatograph 1 and the mass spectrometer 2.

The liquid chromatograph 1 includes a mobile phase container 10 in which a mobile phase is stored, a pump 11 which sucks the mobile phase and delivers the mobile phase at a constant flow rate, an injector 12 which injects a liquid sample into the mobile phase, and a column 13 which separates compounds contained in the liquid sample. In the case of continuously analyzing a plurality of liquid samples, an autosampler (not illustrated) is further provided, and a plurality of liquid samples set in the autosampler are sequentially introduced from the injector 12.

The mass spectrometer 2 includes an ionization chamber 20 and a vacuum chamber. The vacuum chamber is evacuated by a vacuum pump (not shown). The vacuum chamber includes a first intermediate vacuum chamber 21, a second intermediate vacuum chamber 22, and an analysis chamber 23 in this order from the ionization chamber 20, and has a configuration of a multi-stage differential exhaust system with an increasing degree of vacuum in this order.

An electrospray ionization (ESI) probe 201 which nebulizes a sample solution with a charge applied to the sample solution is installed in the ionization chamber 20. The ionization chamber 20 communicates with the first intermediate vacuum chamber 21 as the next stage via a heated capillary 202 of a thin diameter.

An ion lens 211 including a plurality of ring electrodes is disposed in the first intermediate vacuum chamber 21. The ion lens 211 converges the flight path of ions along an ion optical axis C. The first intermediate vacuum chamber 21 and the second intermediate vacuum chamber 22 are separated from each other by a skimmer 212 having a small hole at its top.

An ion guide 221 including a plurality of rod electrodes is disposed in the second intermediate vacuum chamber 22. Similarly to the ion lens 211, the ion guide 221 converges the flight path of ions along the ion optical axis C. The second intermediate vacuum chamber 22 and the analysis chamber are separated from each other by a partition wall in which a small hole is formed.

In the analysis chamber 23, a front quadrupole mass filter 231, a collision cell 232, a rear quadrupole mass filter 234, and an ion detector 235 are disposed. An ion guide 233 is disposed inside the collision cell 232. In addition, a collision-induced dissociation (CID) gas is introduced into the collision cell 232 from a gas source (not illustrated).

The mass spectrometer 2 can perform selected ion monitoring (SIM) measurement, MS/MS scan (product ion scan) measurement, multiple reaction monitoring (MRM) measurement, and the like. In the SIM measurement, the front quadrupole mass filter 231 does not select ions (i.e., does not function as a mass filter), and the mass-to-charge ratio of ions to be allowed to pass through the rear quadrupole mass filter 234 is fixed for ion detection.

On the other hand, in the MS/MS scan measurement and the MRM measurement, both the front quadrupole mass filter 231 and the rear quadrupole mass filter 234 function as the mass filters. The front quadrupole mass filter 231 only allows passage of ions defined as precursor ions. In addition, the CID gas is supplied into the collision cell 232, and the precursor ions are accelerated and introduced into the collision cell 232, and the precursor ions and the CID gas are caused to collide with each other to promote cleavage of the precursor ions. In the MS/MS scan measurement, the mass-to-charge ratio of ions passing through the rear quadrupole mass filter 234 is scanned, and in the MRM measurement, the mass-to-charge ratio of ions passing through the rear quadrupole mass filter 234 is fixed, and only product ions having a specific mass-to-charge ratio are allowed to pass.

The control/processing unit 4 includes a storage unit 41. The storage unit 41 stores a compound database (compound DB) 411 in which information including measurement conditions and analysis methods related to a plurality of known compounds is stored. The measurement conditions stored in the compound DB 411 include, for example, information on the time (retention time) during which the target compound flows out of the column 13, SIM measurement conditions, MRM measurement conditions, MS/MS scan measurement conditions, and the like. The SIM measurement conditions include information on the mass-to-charge ratio of the ions to be measured. The MRM measurement conditions include information on the mass-to-charge ratio of precursor ions, the magnitude of collision energy, and the mass-to-charge ratio of product ions. The MS/MS scan measurement conditions include information on the mass-to-charge ratio of precursor ions, the magnitude of collision energy, and the mass-to-charge ratio range (mass scanning range) of product ions. For the ions to be measured in the SIM measurement and the precursor ions and product ions in the MRM measurement, information of mass-to-charge ratios different for each type of alkali metal ions described later is stored. In addition, the analysis method described in the compound DB 411 includes a peak picking method, a value of a parameter used at the time of peak picking, and information of a calibration curve.

The control/processing unit 4 includes a measurement condition setting unit 42, a measurement control unit 43, and an analysis processing unit 44 as functional blocks. The control/processing unit 4 is actually a personal computer, which causes a program previously installed on the computer to function as the aforementioned units by executing the program. Furthermore, an input unit 5 and a display unit 6 are connected to the control/processing unit 4.

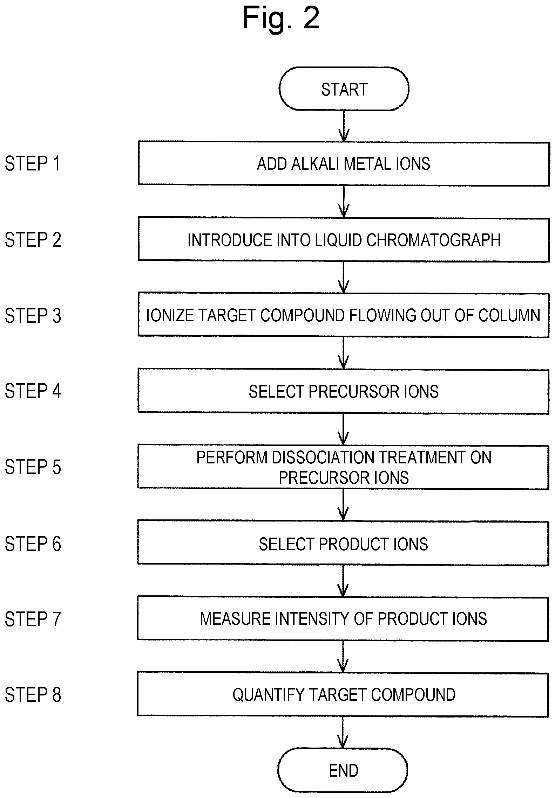

Hereinafter, a procedure for analyzing a target component contained in a liquid sample using the liquid chromatograph mass spectrometer of the present embodiment will be described with reference to the flowchart of Fig. 2.

Prior to the measurement, a user adds alkali metal ions to a mobile phase (step 1). The alkali metal ions may be added by adding a solution in which the alkali metal ions are dissolved to the mobile phase, or may be added by adding a salt of an alkali metal to the mobile phase. When a salt of an alkali metal is added to the mobile phase, it is preferable to add a volatile salt of an alkali metal. The volatile salt refers to a salt from which a solid material is not precipitated when a liquid mobile phase is desolvated in an ion source of a mass spectrometer.

Specifically, for example, a lithium aqueous solution or a lithium salt (lithium hydroxide, lithium hydroxide monohydrate, lithium nitrate, lithium chloride, lithium bromide, and the like) is added to the mobile phase. Alternatively, for example, a sodium aqueous solution or a sodium salt (sodium hydroxide, sodium hydroxide monohydrate, sodium nitrate, sodium chloride, sodium bromide, and the like) is added to the mobile phase.

At this time, the pH of the mobile phase may be changed depending on the type of aqueous solution or salt to be added to the mobile phase. In the liquid chromatograph 1, in many cases, the pH range of the usable mobile phase has been determined for each column 13. Therefore, when the pH of the mobile phase becomes out of the use range of the column 13 by adding the alkali metal ions, an aqueous solution or a salt for adjusting the pH of the mobile phase may be further added as a pH controlling agent. For example, when sodium hydroxide is added, it can be mixed with an acidic volatile salt (salts such as trifluoroacetic acid, formic acid, and acetic acid) to adjust the pH of the mobile phase.

If a nonvolatile salt is added to the mobile phase, the salt may precipitate and block the capillary 202 when desolvated in the ionization chamber 20 of the mass spectrometer 2. In addition, when the nonvolatile salt in the mobile phase is taken into the vacuum chamber, there is a possibility that an opening having a small diameter such as the skimmer 212 is blocked. Furthermore, when salt is precipitated on the surfaces of the ion lens 211, the ion guides 221 and 233, the front quadrupole mass filter 231, or the rear quadrupole mass filter 234, there is a possibility that the salt disturbs a formed electric field.

In addition, at least a larger amount (higher concentration) of alkali metal ions than the assumed amount (concentration) of the target compound contained in the liquid sample is added to the mobile phase. Preferably, a sufficiently large amount (excess amount) of alkali metal ions relative to the assumed amount of the target compound is added to the mobile phase. In addition, a sufficiently large amount (excess amount) of alkali metal ions is added to the mobile phase with respect to a foreign compound contained in the liquid sample and foreign ions that can flow out from each portion of the liquid chromatograph mass spectrometer. The foreign ions as used herein are particularly compounds that affect ion species generated from a target compound. Examples of such foreign ions include ammonium ions contained in the mobile phase of the liquid chromatograph used in a past analysis, sodium ions and potassium ions flowing out of the liquid sample and the glass bottle storing the mobile phase, and the like.

When the user performs a predetermined input operation to instruct measurement of the liquid sample, the measurement condition setting unit 42 displays a screen for allowing the user to input a measurement condition on the display unit 6. The screen includes, for example, a screen for allowing the user to select a target compound and the type of mass spectrometry (SIM measurement, MRM measurement, or MS/MS scan measurement) from a list of a plurality of known compounds. The screen also includes, for example, a screen for allowing the user to select the type of alkali metal ion added to the liquid sample by the user in step 1 from a list of a plurality of alkali metal ions.

When the user selects the target compound, the type of mass spectrometry, and the alkali metal ion, the measurement condition setting unit 42 refers to the compound DB 411 stored in the storage unit 41 and reads the measurement condition of the compound selected by the user. As described above, the compound DB 411 stores, for each compound, values of mass-to-charge ratios (in the case of SIM measurement) of ions to be measured, which are different for each type of alkali metal ions, and values of mass-to-charge ratios (or mass-to-charge ratio ranges) of precursor ions and product ions (in the case of MRM measurement or MS/MS scan measurement). Therefore, the measurement condition setting unit 42 reads information of ions to be measured or mass-to-charge ratios of precursor ions and product ions corresponding to a combination of the target compound and the alkali metal ion selected by the user, and creates a method file describing measurement conditions including the information and a batch file for executing the method file.

After the batch file is created, when the user sets the liquid sample in the injector 12 (or autosampler) and instructs start of measurement, the measurement control unit 43 supplies the mobile phase stored in the mobile phase container 10 to the column 13 by the pump 11. In addition, in the mass spectrometer 2, the first intermediate vacuum chamber 21, the second intermediate vacuum chamber 22, and the analysis chamber 23 in the vacuum chamber are evacuated to predetermined pressures by a vacuum pump (not illustrated). Subsequently, the measurement control unit 43 operates each unit of the liquid chromatograph according to the measurement conditions described in the method file to start the measurement. Hereinafter, an operation when MRM measurement or MS/MS scan measurement is performed will be described.

First, the liquid sample is introduced from the injector 12 into the liquid chromatograph 1 (step 2). The liquid sample introduced from the injector 12 is introduced into the column 13 along the flow of the mobile phase to which alkali metal ions are added. In the column 13, various compounds contained in the liquid sample are separated from each other.

The compounds separated in the column 13 are sequentially introduced into the ESI probe 201 and ionized (step 3). The ions thus generated are converged so as to fly along the ion optical axis C by the ion lens 211 and the ion guide 221, and then enter the analysis chamber 23.

In the front quadrupole mass filter 231, only ions having a mass-to-charge ratio set as precursor ions of the target compound are selected from the ions entered the analysis chamber 23 (step 4). The ions selected as precursor ions are applied with collision energy, and therefore the ions are accelerated and enter the collision cell 232. In the collision cell 232, the precursor ions collide with the molecules of the collision gas introduced into the collision cell 232 and are cleaved, so that product ions are generated (step 5).

The product ions generated in the collision cell 232 enter the rear quadrupole mass filter 234. When the MRM measurement is selected, the rear quadrupole mass filter 234 selects only ions having a mass-to-charge ratio set as product ions of the target compound among the product ions (step 6). When MS/MS scan measurement is selected, the rear quadrupole mass filter 234 repeatedly performs mass scanning in a mass-to-charge ratio range set as a measurement condition to select product ions (step 6). The product ions selected by the rear quadrupole mass filter 234 enter the ion detector 235, and the intensity of the ions is measured (step 7). Output data from the ion detector 235 is sequentially transmitted to the control/processing unit 4 and stored in the storage unit 41.

After completion of the measurement, the analysis processing unit 44 creates a chromatogram using the output data from the ion detector 235. The analysis processing unit 44 creates an extracted ion current chromatogram when MRM measurement is performed, and creates a total ion current chromatogram when MS/MS scan measurement is performed. Then, a peak is extracted from the chromatogram using the peak picking method and parameters read from the compound DB 411 as the target compound analysis method, and the area of the peak is obtained. Furthermore, the analysis processing unit 44 calculates the quantitative value of the target compound by comparing the peak area with the calibration curve (step 8). The quantitative value calculated by the analysis processing unit 44 is displayed on the screen of the display unit 6 together with the chromatogram. In addition, in the case of MS/MS scan measurement, a product ion spectrum is prepared, and collated with the product ion spectrum of the compound stored in the compound DB 411, so that it can be confirmed (qualitatively determined) that the measured compound is the target compound.

The mass spectrometry method of the present embodiment is characterized in that alkali metal ions are added before the measurement of the liquid sample. When a target compound having a complicated molecular structure, such as an organic polymer compound, is ionized, various ions other than protonated ions may be generated. Examples of such ions include dehydrated ions, and adduct ions such as solvated ions, ammonium adduct ions, sodium adduct ions, and potassium adduct ions. For example, when the target compound is a sugar (monosaccharides, disaccharides, oligosaccharides), an agricultural chemical (oxamyl, pentoxazone, emamectin, their metabolites, or the like), a pharmaceutical product for animals (e.g., cefuroxime), mycotoxin (diacetoxyscirpenol, HT-2, T-2, neosolaniol, etc.), shellfish toxin, fish toxin (ciguatoxin, palytoxin, brevetoxin, etc.), or a functional compound (terpenoid type, ginkgolide, bilobalide, or the like), these various ions are likely to be generated.

The above adduct ions are considered to be formed, for example, by ammonium ions derived from a mobile phase used in the past, sodium ions, potassium ions, and the like flowing out from a glass container accommodating a mobile phase or a liquid sample, a glass capillary constituting the ESI probe 201, and the like attached to the molecules of the target compound. In MRM measurement in which adduct ions formed by an addition of these ions to a target compound are used as precursor ions, reproducibility of measurement is poor and it is difficult to accurately quantify the target compound. In addition, when a plurality of kinds of ions are generated from the target compound, even if any of the ions is selected as a precursor ion, the amount of precursor ions is smaller than that in a case where only one kind of ion is generated, and the measurement sensitivity is poor. As described above, since MRM measurement is used to quantify a trace amount of a target compound contained in a sample, the target compound cannot be detected in some cases if the measurement sensitivity is poor. In addition, when MS/MS scan measurement is performed, intensities of a plurality of types of product ions generated from such a small amount of precursor ions are measured to create a product ion spectrum. Therefore, some product ions are not detected, and correct spectrum matching cannot be performed in some cases.

On the other hand, in the mass spectrometry method of the present embodiment, by adding an alkali metal ion to the mobile phase, a [M+X]⁺ ion in which the alkali metal ion X⁺ is added to a molecule M of the target compound contained in the liquid sample is generated. As described above, in the present embodiment, an excessive amount of the alkali metal ions with respect to the target compound and the foreign compound is added to the mobile phase to suppress generation of unintended dehydrated ions and adduct ions such as solvated ions, ammonium adduct ions, sodium adduct ions, and potassium adduct ions, and ion species generated from the target compound are narrowed down to alkali metal adduct ions [M+X]⁺. As described above, by generating substantially only one kind of alkali metal adduct ions from the target compound and using the alkali metal adduct ion as precursor ions, sensitivity and reproducibility in MRM measurement and MS/MS scan measurement can be improved.

Among alkali metal adduct ions, lithium adduct ions and sodium adduct ions are hardly cleaved once generated. In particular, sodium adduct ions are hardly cleaved. Therefore, when the MRM measurement is performed by adding lithium ions or sodium ions to the mobile phase as the alkali metal ions, lithium adduct ions or sodium adduct ions may preferably be used as the precursor ions, and further, lithium adduct ions or sodium adduct ions may preferably be used as the product ions. For example, when ions derived from a foreign compound having the same mass-to-charge ratio as the lithium adduct ions or the sodium adduct ions are contained, only the ions derived from the foreign compound can be cleaved to accurately analyze only the target compound. In the case of generating lithium adduct ions, a compound can be identified (qualitatively determined) by not only performing MRM measurement of the lithium adduct ions as precursor ions and product ions as described above, but also by using the lithium adduct ions as precursor ions and measuring product ions generated by cleavage of the precursor ions by MS/MS scan measurement to acquire a product ion spectrum.

### EXAMPLE

Measurement examples in which the mass spectrometry method of the above embodiment was used to generate one kind of alkali metal adduct ions from a target compound that is likely to generate many kinds of ions will be described.

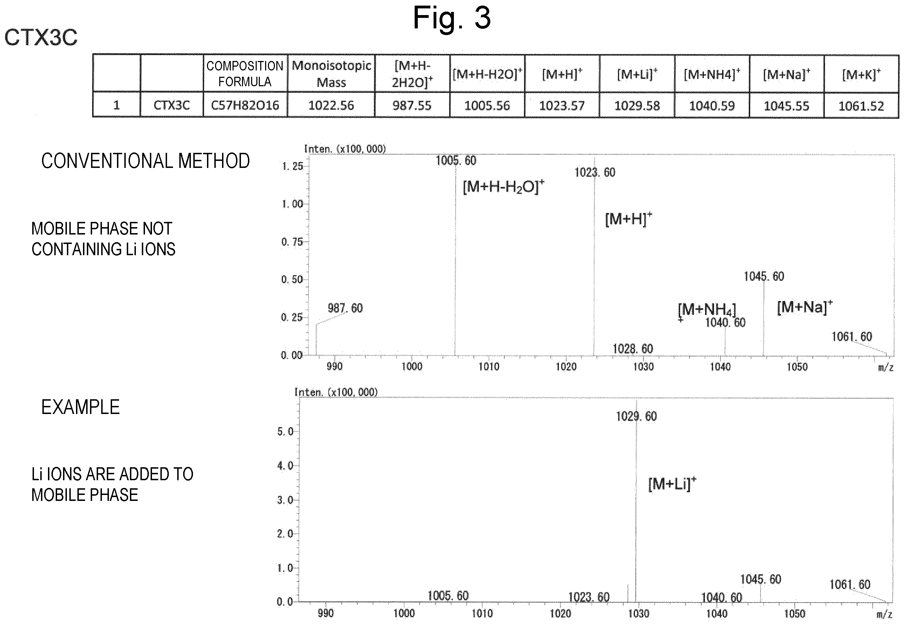

Fig. 3 shows, for CTX3C which is one of the ciguatoxins, a multi-SIM spectrum obtained by a conventional mass spectrometry method (measurement using a mobile phase to which alkali metal ions are not added) (upper graph, MS spectrum), and a multi-SIM spectrum (MS spectrum) obtained by the mass spectrometry method of the above embodiment (lower graph, measurement using a mobile phase to which alkali metal ions are added). The multi-SIM spectrum represents the intensity of each ion acquired by individually performing SIM measurement on ions having a plurality of different mass-to-charge ratios in a graph in which the horizontal axis represents the mass-to-charge ratio and the vertical axis represents the intensity, similarly to a normal mass spectrum. In the conventional mass spectrometry method, two kinds of ions of dehydrated ions [M+H-H₂O]⁺ and protonated ions [M+H]⁺ were mainly detected, and in addition, two-molecule dehydrated ions [M+H-2H₂O]⁺, ammonium adduct ions [M+NH₄]⁺, sodium adduct ions [M+Na]⁺, and potassium adduct ions [M+K]⁺ were detected, whereas in the mass spectrometry method of the present example, substantially only lithium adduct ions [M+Li]⁺ were detected with high intensity.

In addition, also for CTX1B, which is another kind of ciguatoxins, multi-SIM spectra were acquired by the conventional mass spectrometry method and the mass spectrometry method of the above embodiment, respectively, in the same manner as described above. Also for CTX1B, ammonium adduct ions [M+NH₄]⁺ were mainly detected by the conventional mass spectrometry method, and in addition, two-molecule dehydrated ions [M+H-2H₂O]⁺, dehydrated ions [M+H-H₂O]⁺, protonated ions [M+H]⁺, sodium adduct ions [M+Na]⁺, and potassium adduct ions [M+K]⁺ were detected, whereas in the mass spectrometry method of the present example, substantially only lithium adduct ions [M+Li]⁺ were detected with high intensity.

Furthermore, also for 51-hydroxy-CTX3C, which is another kind of ciguatoxins, multi-SIM spectra were acquired by the conventional mass spectrometry method and the mass spectrometry method of the above embodiment, respectively, in the same manner as described above. Also for 51-hydroxy-CTX3C, in the conventional mass spectrometry method, two-molecule dehydrated ions [M+H-2H₂O]⁺, dehydrated ions [M+H-H₂O]⁺, and protonated ions [M+H]⁺ were mainly detected, and in addition, sodium adduct ions [M+Na]⁺ and potassium adduct ions [M+K]⁺ were detected, whereas in the mass spectrometry method of the present example, substantially only lithium adduct ions [M+Li]⁺ were detected with high intensity.

Furthermore, also for 52-epi-54-deoxy-CTX1B, which is another kind of ciguatoxins, multi-SIM spectra were acquired by the conventional mass spectrometry method and the mass spectrometry method of the above embodiment, respectively, in the same manner as described above. Also for the 52-epi-54-deoxy-CTX1B, in the conventional mass spectrometry method, various ions such as two-molecule dehydrated ions [M+H-2H₂O]⁺, dehydrated ions [M+H-H₂O]⁺, protonated ions [M+H]⁺, ammonium adduct ions [M+NH₄]⁺, and sodium adduct ions [M+Na]⁺ were detected, whereas in the mass spectrometry method of this example, substantially only lithium adduct ions [M+Li]⁺ were detected with high intensity.

Furthermore, also for CTX4A, which is still another kind of the ciguatoxins, multi-SIM spectra were acquired by the conventional mass spectrometry method and the mass spectrometry method of the above embodiment, respectively, in the same manner as described above. Also for CTX4A, in the conventional mass spectrometry method, various ions such as dehydrated ions [M+H-H₂O]⁺, protonated ions [M+H]⁺, ammonium adduct ions [M+NH₄]⁺, and sodium adduct ions [M+Na]⁺ were mainly detected, and further, two-molecule dehydrated ions [M+H-2H₂O]⁺ were detected, whereas in the mass spectrometry method of the present example, substantially only lithium adduct ions [M+Li]⁺ were detected with high intensity.

All of the above are examples obtained by adding lithium ions to the mobile phase, but similar results were confirmed even when sodium ions were added to the mobile phase. As shown in the examples, by using the mass spectrometry method of the present embodiment, only substantially one kind of alkali metal adduct ions can be generated from the target compound (in particular, an organic polymer). Then, by performing MRM measurement or MS/MS scan measurement using this one kind of alkali metal adduct ions as precursor ions, the target compound can be quantified and identified with high accuracy.

As described in Non Patent Literature 1, when each component in a liquid sample containing ciguatoxins is separated by a liquid chromatograph, gradient analysis is generally performed in which a mobile phase in which a plurality of kinds of solvents are mixed is used, and a mixing ratio of the solvents is changed with time.

In such gradient analysis, it is possible to add alkali metal ions to both an organic solvent and an inorganic solvent, but as a result of investigation on ciguatoxins by the present inventor under various conditions, it has been found that when alkali metal ions are added to an organic solvent, adduct ions formed by an addition of the alkali metal ion are effectively generated, whereas when alkali metal ions and an acidic solution are added to an aqueous mobile phase, adduct ions formed by an addition of the alkali metal ion is not generated in some cases. The above measurement examples are also results of separating and measuring a target compound (CTX3C or the like) in a liquid sample by gradient analysis, which changes with time a mixing ratio of an organic solvent and a mixed liquid, using a liquid chromatograph mass spectrometer. The organic solvent was obtained by mixing lithium hydroxide with acetonitrile to add lithium ions, and further adding formic acid, which is an acidic volatile salt, to adjust the pH. The mixed liquid contained formic acid and water.

Since the ciguatoxins are organic polymer compounds, affinity with the organic solvent contained in the mobile phase is high in the gradient analysis as described above. Therefore, it is considered that by adding alkali metal ions to the organic solvent, adduct ions formed by an addition of the alkali metal ion is efficiently generated.

As described above, examples of the compound that generates various ions other than protonated ions include sugars (monosaccharides, disaccharides, oligosaccharides), agricultural chemicals (oxamyl, pentoxazone, emamectin, their metabolites, and the like), pharmaceutical products for animals (e.g., cefuroxime), mycotoxins (diacetoxyscirpenol, HT-2, T-2, neosolaniol, etc.), shellfish toxins, fish toxins (ciguatoxin, palytoxin, brevetoxin, etc.), and functional compounds (terpenoid type, ginkgolide, bilobalide, and the like), and many of them are organic polymer compounds as with ciguatoxins. Therefore, when the target compound is an organic polymer compound, by adding predetermined alkali metal ions to an organic solvent having high affinity with the organic polymer compound, it is possible to efficiently generate adduct ions formed by an addition of the alkali metal ion. When the target compound is a low molecular compound such as a monosaccharide or a disaccharide or an inorganic compound, adduct ions formed by an addition of alkali metal ion can be efficiently generated by adding the alkali metal ion to an inorganic solvent.

Each of the above embodiment and examples is merely an example, and can be appropriately modified in accordance with the spirit of the present invention.

Since the liquid chromatograph mass spectrometer is used in the above embodiment and examples, the alkali metal ions are added to the target compound in the liquid sample by adding the alkali metal ions to the mobile phase. However, when only the mass spectrometer is used, the alkali metal ions may be added to the liquid sample itself. In addition, the configuration of the mass spectrometer described in the above embodiment (triple quadrupole mass spectrometer) is merely an example, and mass spectrometers having various configurations capable of executing MRM measurement and MS/MS scan measurement can be used.

### [Modes]

It is obvious for those skilled in the art that the above-described exemplary embodiment is a specific example of the following modes.

### (Clause 1)

A mass spectrometry method according to a mode of the present invention includes:
a preparation step of adding a predetermined alkali metal ion to a liquid sample;
an ionization step of ionizing a target compound contained in the liquid sample to which the alkali metal ion has been added; and
a measurement step of measuring an intensity of an adduct ion formed in the ionization step by adding the predetermined alkali metal ion to the target compound, or an intensity of an ion derived from the adduct ion.

In the mass spectrometry method according to clause 1, the preparation step is performed before performing mass spectrometry, in which the predetermined alkali metal ion is added to the liquid sample. The predetermined alkali metal ion may be added by adding the ion itself (for example, adding a liquid containing the ion), or may be added by dissolving a salt of the alkali metal in the liquid sample. As described above, when the ionization step is performed in a state where the predetermined alkali metal ion has been supplied to the liquid sample, a predetermined alkali metal adduct ion formed by an addition of the alkali metal ion is mainly generated, and generation of other kinds of adduct ions is suppressed. In addition, since most of alkali metal ions are hard to be dissociated, generation of dehydrated ions and solvated ions is also suppressed.

A mass spectrometer according to clause 1 measures the intensity of the adduct ion among ions formed in the ionization step, the adduct ion being formed by an addition of the predetermined alkali metal ion to the target compound, or the intensity of the ion derived from the adduct ion. Therefore, the amount of ions to be measured is larger than that in the case where a plurality of kinds of ions are generated from the target compound due to ions generated from the liquid sample or a sample container, and the target compound can be measured with high sensitivity. In addition, since the mechanism by which the alkali metal adduct ion is generated has sufficient reproducibility, the target compound can be accurately quantified.

### (Clause 2)

A mass spectrometry method according to clause 2 is the mass spectrometry method according to clause 1, in which
in the preparation step, a mobile phase containing an organic solvent to which the predetermined alkali metal ion has been added is adjusted, and the liquid sample is introduced into a column of a liquid chromatograph on a flow of the mobile phase, and
in the ionization step, the liquid sample flowing out of the column is ionized.

Many of the compounds in which various ions other than protonated ions are generated are polymeric organic compounds, so that such compounds have high affinity with organic solvents. In the mass spectrometry method according to clause 2, the liquid sample is introduced into the column of the liquid chromatograph by the mobile phase in which the predetermined alkali metal ion is added to the organic solvent, and the liquid sample flowing out of the column is ionized. Therefore, the predetermined alkali metal ion is easily added to the target compound, and the alkali metal adduct ion is efficiently generated.

### (Clause 3)

A mass spectrometry method according to clause 3 is the mass spectrometry method according to clause 1 or 2, in which
in the preparation step, a pH adjusting agent for adjusting pH is further added to the mobile phase.

When an alkali metal ion is added to a mobile phase by adding a salt of an alkali metal or the like, the pH of the mobile phase may change. In a liquid chromatograph, the pH range of the usable mobile phase may have been determined for each column. In the mass spectrometry method according to clause 3, by adjusting the pH of the mobile phase using the pH adjusting agent, the target compound contained in the liquid sample can be measured using the mobile phase having a pH suitable for the column and to which an alkali metal ion has been added.

### (Clause 4)

A mass spectrometry method according to clause 4 is the mass spectrometry method according to clause 1, in which
in the preparation step, a volatile salt of a predetermined alkali metal is added to the liquid sample.

If a nonvolatile salt is added to the mobile phase, the salt is precipitated when desolvation is performed to ionize the liquid sample, and when the precipitated salt is taken into a mass spectrometer unit, there is a possibility that an opening having a small diameter such as a skimmer is blocked. In addition, when the salt is precipitated on a surface of an ion guide or a mass filter, there is a possibility that the precipitated salt disturbs the electric field formed by the ion guide or mass filter. In the mass spectrometry method according to clause 4, since volatile salt of the alkali metal is added, such a problem does not occur.

### (Clause 5)

A mass spectrometry method according to clause 5 is the mass spectrometry method according to any one of clauses 1 to 4, in which
the predetermined alkali metal ion is a lithium ion or a sodium ion.

Adduct ions once formed by an addition of, among other alkali metal ions, a lithium ion or a sodium ion to a target compound are hard to be dissociated. Therefore, in the mass spectrometry method according to clause 5, generation of other kinds of ions can be further suppressed.

### (Clause 6)

A mass spectrometry method according to clause 6 is the mass spectrometry method according to any one of clauses 1 to 5, in which
in the measurement step, among ions generated in the ionization step, an adduct ion formed by adding the predetermined alkali metal ion to the target compound is selected as a precursor ion, the precursor ion is subjected to a dissociation treatment, and then an intensity of an ion not dissociated by the dissociation treatment is measured.

An adduct ion formed by an addition of an alkali metal ion to a molecule of a target compound is hardly dissociated. In the mass spectrometry method of clause 6, such an adduct ion is used as the precursor ion, and the intensity of ions remaining without being dissociated after the precursor ion is subjected to the dissociation treatment is measured. As a result, even when a foreign ion having the same mass-to-charge ratio as the mass-to-charge ratio of the adduct ion of the target compound is present, it is possible to dissociate only the foreign ions and measure only ions derived from the target compound.

### REFERENCE SIGNS LIST

1... Liquid Chromatograph
10... Mobile Phase Container
11... Pump
12... Injector
13... Column
2... Mass Spectrometer
20... Ionization Chamber
201... ESI Probe
21... First Intermediate Vacuum Chamber
211... Ion Lens
22... Second Intermediate Vacuum Chamber
221... Ion Guide
23... Analysis Chamber
231... Front Quadrupole Mass Filter
232... Collision Cell
233... Ion Guide
234... Rear Quadrupole Mass Filter
235... Ion Detector
4... Control/Processing Unit
41... Storage Unit
411... Compound DB
42... Measurement Condition Setting Unit
43... Measurement Control Unit
44... Analysis Processing Unit
5... Input Unit
6... Display Unit
C... Ion Optical Axis

## Claims

1. A mass spectrometry method comprising:
a preparation step of adding a predetermined alkali metal ion to a liquid sample;
an ionization step of ionizing a target compound contained in the liquid sample to which the alkali metal ion has been added; and
a measurement step of measuring an intensity of an adduct ion formed in the ionization step by adding the predetermined alkali metal ion to the target compound, or an intensity of an ion derived from the adduct ion.

2. The mass spectrometry method according to claim 1, wherein
in the preparation step, a mobile phase containing an organic solvent to which the predetermined alkali metal ion has been added is adjusted, and the liquid sample is introduced into a column of a liquid chromatograph on a flow of the mobile phase, and
in the ionization step, the liquid sample flowing out of the column is ionized.

3. The mass spectrometry method according to claim 2, wherein in the preparation step, a pH adjusting agent for adjusting pH is further added to the mobile phase.

4. The mass spectrometry method according to claim 1, wherein in the preparation step, a volatile salt of a predetermined alkali metal is added to the liquid sample.

5. The mass spectrometry method according to claim 1, wherein the predetermined alkali metal ion is a lithium ion or a sodium ion.

6. The mass spectrometry method according to claim 1, wherein in the measurement step, among ions generated in the ionization step, an adduct ion formed by an addition of the predetermined alkali metal ion to the target compound is selected as a precursor ion, the precursor ion is subjected to a dissociation treatment, and then an intensity of an ion not dissociated by the dissociation treatment is measured.
